# EUROPEAN PATENT APPLICATION

(11) **EP 4 525 402 A1**
(43) Date of publication of application: **19.03.2025**
(21) Application number: 23831923.0
(22) Date of filing: 29.06.2023
(51) Int. Cl.: H04L 51/48, H04L 9/00, H04L 9/30, H04L 9/08

(54) **METHOD, SYSTEM, AND NON-TRANSITORY COMPUTER-READABLE RECORDING MEDIUM FOR PROVIDING MESSENGER SERVICE**

(30) Priority: 29.06.2022 KR 20220080078
(71) Applicant: Hopae Inc., Seoul 06248 (KR)
(72) Inventor: SHIM, Jae Hoon, Seoul 06250 (KR)
(74) Representative: Hoefer & Partner Patentanwälte mbB
(86) International application number: PCT/KR2023/009123
(87) International publication number: WO 2024/005565

(57) **Abstract**

A method for providing a messenger service is provided. The method includes the steps of: specifying a message receiving address of a recipient on the basis of an identifier for a first blockchain network associated with the recipient; and transmitting, to the message receiving address, a message that is encrypted on the basis of a public key of the recipient in the first blockchain network and decrypted on the basis of a private key of the recipient in the first blockchain network.

## Description

### CROSS-REFERENCE TO RELATED APPLICATION(S)

This application is a national phase of Patent Cooperation Treaty (PCT) International Application No. PCT/KR2023/009123 filed on June 29, 2023, which claims priority to Korean Patent Application No. 10-2022-0080078 filed on June 29, 2022. The entire contents of PCT International Application No. PCT/KR2023/009123 and Korean Patent Application No. 10-2022-0080078 are hereby incorporated by reference.

### FIELD OF THE INVENTION

The present invention relates to a method, system, and non-transitory computer-readable recording medium for providing a messenger service.

### BACKGROUND

A messenger that assists users to send and receive messages between themselves is one of the widely used types of clients in the world.

In order to send and receive messages using a messenger, it is necessary to specify the addresses of a message sender and a message recipient. Conventional messengers specify these addresses by using a messenger ID set by the user (i.e., the message sender or recipient), a serial number of the user's terminal, a MAC address of the user's terminal, and the like, which does not guarantee the user's anonymity.

In this connection, the inventor(s) present a technique for specifying a message receiving address of a recipient on the basis of an identifier for a first blockchain network associated with the recipient, and transmitting, to the message receiving address, a message that is encrypted on the basis of a public key of the recipient in the first blockchain network and decrypted on the basis of a private key of the recipient in the first blockchain network, thereby assisting a user to utilize a messenger service while the user's anonymity is guaranteed.

### SUMMARY OF THE INVENTION

One object of the present invention is to solve all the above-described problems in the prior art.

Another object of the invention is to specify a message receiving address of a recipient on the basis of an identifier for a first blockchain network associated with the recipient, and transmit, to the message receiving address, a message that is encrypted on the basis of a public key of the recipient in the first blockchain network and decrypted on the basis of a private key of the recipient in the first blockchain network.

Yet another object of the invention is to assist a user to utilize a messenger service while the user's anonymity is guaranteed.

The representative configurations of the invention to achieve the above objects are described below.

According to one aspect of the invention, there is provided a method comprising the steps of: specifying a message receiving address of a recipient on the basis of an identifier for a first blockchain network associated with the recipient; and transmitting, to the message receiving address, a message that is encrypted on the basis of a public key of the recipient in the first blockchain network and decrypted on the basis of a private key of the recipient in the first blockchain network.

According to another aspect of the invention, there is provided a system comprising: a message receiving address management unit configured to specify a message receiving address of a recipient on the basis of an identifier for a first blockchain network associated with the recipient; and a message management unit configured to transmit, to the message receiving address, a message that is encrypted on the basis of a public key of the recipient in the first blockchain network and decrypted on the basis of a private key of the recipient in the first blockchain network.

In addition, there are further provided other methods and systems to implement the invention, as well as non-transitory computer-readable recording media having stored thereon computer programs for executing the methods.

According to the invention, it is possible to specify a message receiving address of a recipient on the basis of an identifier for a first blockchain network associated with the recipient, and transmit, to the message receiving address, a message that is encrypted on the basis of a public key of the recipient in the first blockchain network and decrypted on the basis of a private key of the recipient in the first blockchain network.

According to the invention, it is possible to assist a user to utilize a messenger service while the user's anonymity is guaranteed.

### BRIEF DESCRIPTION OF THE DRAWINGS

FIG. 1 schematically shows the configuration of an entire system for providing a messenger service according to one embodiment of the invention.
FIG. 2 specifically shows the internal configuration of a messenger service provision system according to one embodiment of the invention.
FIG. 3 schematically shows the configuration of a blockchain network according to one embodiment of the invention.

### DETAILED DESCRIPTION OF THE PREFERRED EMBODIMENTS

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures and characteristics described herein may be implemented as modified from one embodiment to another without departing from the spirit and scope of the invention. Furthermore, it shall be understood that the positions or arrangements of individual elements within each embodiment may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, various preferred embodiments of the invention will be described in detail with reference to the accompanying drawings to enable those skilled in the art to easily implement the invention.

### Configuration of the entire system

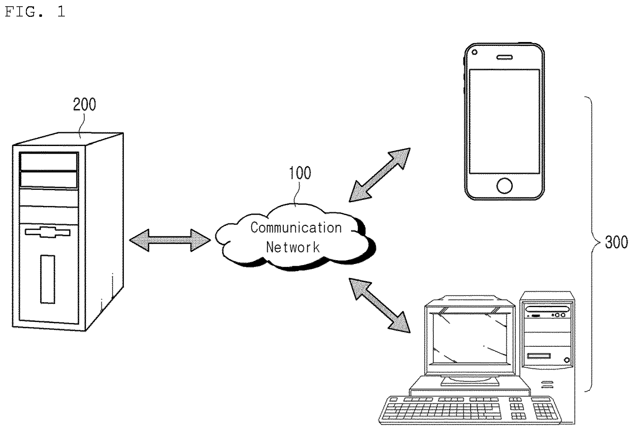

FIG. 1 schematically shows the configuration of the entire system for providing a messenger service according to one embodiment of the invention.

As shown in FIG. 1, the entire system according to one embodiment of the invention may comprise a communication network 100, a messenger service provision system 200, and a device 300.

First, the communication network 100 according to one embodiment of the invention may be implemented regardless of communication modality such as wired and wireless communications, and may be constructed from a variety of communication networks such as local area networks (LANs), metropolitan area networks (MANs), and wide area networks (WANs). Preferably, the communication network 100 described herein may be the Internet or the World Wide Web (WWW). However, the communication network 100 is not necessarily limited thereto, and may at least partially include known wired/wireless data communication networks, known telephone networks, or known wired/wireless television communication networks.

For example, the communication network 100 may be a wireless data communication network, at least a part of which may be implemented with a conventional communication scheme such as WiFi communication, WiFi-Direct communication, Long Term Evolution (LTE) communication, 5G communication, Bluetooth communication (including Bluetooth Low Energy (BLE) communication), infrared communication, and ultrasonic communication. As another example, the communication network 100 may be an optical communication network, at least a part of which may be implemented with a conventional communication scheme such as LiFi (Light Fidelity).

Next, the messenger service provision system 200 according to one embodiment of the invention may function to specify a message receiving address of a recipient on the basis of an identifier for a first blockchain network associated with the recipient, and transmit, to the message receiving address, a message that is encrypted on the basis of a public key of the recipient in the first blockchain network and decrypted on the basis of a private key of the recipient in the first blockchain network.

The configuration and functions of the messenger service provision system 200 according to one embodiment of the invention will be discussed in detail below.

Next, the device 300 according to one embodiment of the invention is digital equipment capable of connecting to and then communicating with the messenger service provision system 200, and any type of digital equipment having a memory means and a microprocessor for computing capabilities, such as a smart phone, a tablet, a smart watch, a smart band, smart glasses, a desktop computer, a notebook computer, a workstation, a personal digital assistant (PDAs), a web pad, and a mobile phone, may be adopted as the device 300 according to the invention.

In particular, the device 300 may include an application (not shown) for assisting a user to receive a messenger service from the messenger service provision system 200. The application may be downloaded from the messenger service provision system 200 or an external application distribution server (not shown). Meanwhile, the characteristics of the application may be generally similar to those of a message receiving address management unit 210, a message management unit 220, a communication unit 230, and a control unit 240 of the messenger service provision system 200 to be described below. Here, at least a part of the application may be replaced with a hardware device or a firmware device that may perform a substantially equal or equivalent function, as necessary.

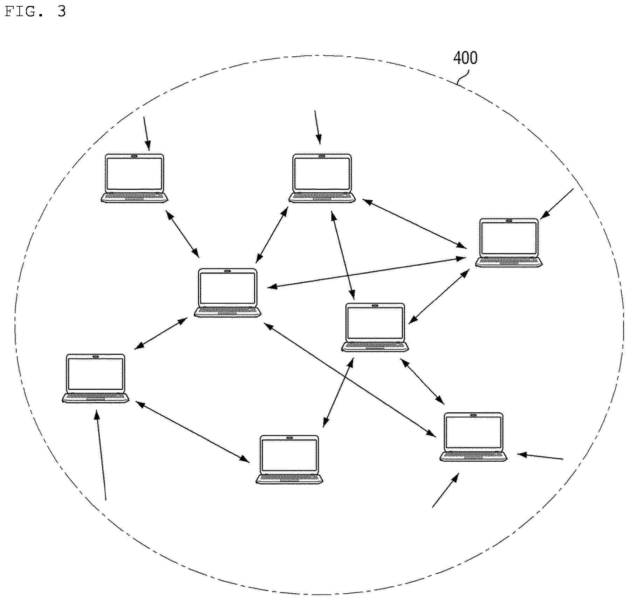

FIG. 3 schematically shows the configuration of a blockchain network according to one embodiment of the invention. As shown in FIG. 3, the blockchain network according to one embodiment of the invention may comprise a communication network and a plurality of nodes 400.

According to one embodiment of the invention, the blockchain network (i.e., a first blockchain network and/or a second blockchain network) may allow the plurality of nodes 400 participating in the network to verify information to be stored on the network, and may record and share the verified information on the network, thereby ensuring the integrity and reliability of the recorded information without relying on certified third parties. For example, according to one embodiment of the invention, at least a part of the characteristics of the blockchain network may be similar to those of a conventional blockchain network based on Bitcoin, Ethereum, Quantum, or the like. Further, according to one embodiment of the invention, the blockchain network may encompass various types of blockchain networks such as a private blockchain network, a public blockchain network, or a combination of private and public blockchain networks. Here, the nodes 400 are points of contact or connection that may communicate with each other via the communication network, and may encompass physical nodes based on a server, a computer, a laptop, a smart phone, a tablet PC, and the like (i.e., digital equipment having a memory means and a microprocessor for computing capabilities) or logical nodes based on an application, a program module, a virtual machine, and the like (i.e., virtual nodes).

Further, the blockchain network according to one embodiment of the invention may issue and distribute cryptocurrency for operation, management, and the like of the network. For example, according to one embodiment of the invention, the cryptocurrency may be generated on the basis of an Ethereum token standard (or ERC-20) or a Quantum token standard (or QRC, a Quantum's counterpart of ERC-20).

Further, the blockchain network according to one embodiment of the invention may issue and distribute non-fungible tokens (NFTs). For example, according to one embodiment of the invention, the NFTs may be generated on the basis of an Ethereum token standard (or ERC-721).

However, the cryptocurrency and NFTs according to one embodiment of the invention are not limited to those described above, but may be diversely changed as long as the objects of the invention may be achieved.

### Configuration of the messenger service provision system

Hereinafter, the internal configuration of the messenger service provision system 200 crucial for implementing the invention and the functions of the respective components thereof will be discussed.

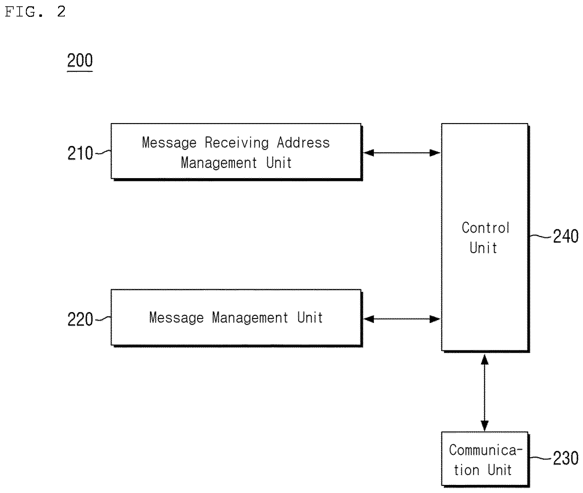

FIG. 2 specifically shows the internal configuration of the messenger service provision system 200 according to one embodiment of the invention.

As shown in FIG. 2, the messenger service provision system 200 according to one embodiment of the invention may comprise a message receiving address management unit 210, a message management unit 220, a communication unit 230, and a control unit 240. According to one embodiment of the invention, at least some of the message receiving address management unit 210, the message management unit 220, the communication unit 230, and the control unit 240 may be program modules to communicate with an external system (not shown). The program modules may be included in the messenger service provision system 200 in the form of operating systems, application program modules, or other program modules, while they may be physically stored in a variety of commonly known storage devices. Further, the program modules may also be stored in a remote storage device that may communicate with the messenger service provision system 200. Meanwhile, such program modules may include, but are not limited to, routines, subroutines, programs, objects, components, data structures, and the like for performing specific tasks or executing specific abstract data types as will be described below in accordance with the invention.

Meanwhile, the above description is illustrative although the messenger service provision system 200 has been described as above, and it will be apparent to those skilled in the art that at least a part of the components or functions of the messenger service provision system 200 may be implemented in the device 300 or a server (not shown) or included in an external system (not shown), as necessary.

First, the message receiving address management unit 210 according to one embodiment of the invention may function to specify a message receiving address of a recipient on the basis of an identifier for a first blockchain network associated with the recipient.

Specifically, according to one embodiment of the invention, the identifier for the first blockchain network associated with the recipient may refer to information used to identify or specify the recipient on the first blockchain network utilized by the recipient. More specifically, according to one embodiment of the invention, the identifier may be information that is irrelevant to (or does not include) personal information on the recipient (e.g., a name, resident registration number, and mobile phone number) and is used to identify or specify the recipient (or a node associated with the recipient) on the first blockchain network, and may be, for example, a wallet address of the recipient used in the first blockchain network. The message receiving address management unit 210 according to one embodiment of the invention may specify the message receiving address of the recipient on the basis of the identifier for the first blockchain network associated with the recipient (e.g., may use the identifier for the first blockchain network associated with the recipient as a messenger ID for the recipient), thereby assisting the recipient to utilize the messenger service without the risk of exposing personal information of the recipient, i.e., while the recipient's anonymity is guaranteed.

However, the type of the identifier for the first blockchain network associated with the recipient and the method of specifying the message receiving address according to one embodiment of the invention are not limited to those described above, but may be diversely changed as long as the objects of the invention may be achieved.

Further, the message receiving address management unit 210 according to one embodiment of the invention may specify the message receiving address of the recipient on the basis of not only the identifier for the first blockchain network associated with the recipient, but also an identifier for the first blockchain network itself.

Specifically, according to one embodiment of the invention, the identifier for the first blockchain network itself may refer to information that allows the first blockchain network to be identified. For example, according to one embodiment of the invention, the identifier may be Bitcoin (in this case, the first blockchain network is a Bitcoin network), Ethereum (in this case, the first blockchain network is an Ethereum network), and the like. Further, the message receiving address management unit 210 according to one embodiment of the invention may cause the message receiving address of the recipient (e.g., the messenger ID of the recipient) to be specified on the basis of the identifier for the first blockchain associated with the recipient (e.g., the wallet address of the recipient used in the first blockchain network) and the identifier for the first blockchain network itself (e.g., Ethereum) (e.g., may cause data obtained by combining the wallet address of the recipient used in the first blockchain network and the identifier for the first blockchain network itself to be used as the messenger ID for the recipient). This allows the messenger service to operate smoothly even when the sender and recipient utilize different types of blockchain networks that are not compatible with each other.

Further, the message receiving address management unit 210 according to one embodiment of the invention may cause the message receiving address specified as above and a public key of the recipient in the first blockchain network to be recorded on a second blockchain network in a structure similar to a decentralized identifier document (DID). This allows the sender and recipient to easily and quickly access the message receiving address specified as above and the public key of the recipient in the first blockchain network, even when they utilize different types of blockchain networks that are not compatible with each other.

However, the type of the identifier for the first blockchain network itself and the method of specifying the message receiving address according to one embodiment of the invention are not limited to those described above, but may be diversely changed as long as the objects of the invention may be achieved.

Next, the message management unit 220 according to one embodiment of the invention may function to transmit, to the message receiving address of the recipient, a message that is encrypted on the basis of a public key of the recipient in the first blockchain network and decrypted on the basis of a private key of the recipient in the first blockchain network.

Specifically, when transmitting a message of the sender to the recipient, the message management unit 220 according to one embodiment of the invention may encrypt the message on the basis of the public key of the recipient in the first blockchain network and then transmit the encrypted message to the message receiving address of the recipient. Then, the message management unit 220 according to one embodiment of the invention may decrypt the received message encrypted as above on the basis of the private key of the recipient in the first blockchain network. According to one embodiment of the invention, the series of processes of encrypting and decrypting the message as above may be performed using an asymmetric key encryption algorithm such as an elliptic curve integrated encryption scheme (ECIES) algorithm. However, the processes of encrypting and decrypting the message according to one embodiment of the invention are not limited to the above algorithm, but may be performed using any algorithm that may be diversely changed as long as the objects of the invention may be achieved.

Meanwhile, the message management unit 220 according to one embodiment of the invention may use various methods to acquire the public key of the recipient in the first blockchain network.

For example, when the message receiving address management unit 210 according to one embodiment of the invention causes the message receiving address of the recipient and the public key of the recipient in the first blockchain network to be recorded on the second blockchain network in a structure similar to a decentralized identifier document (DID), the message management unit 220 according to one embodiment of the invention may acquire the public key of the recipient on the basis of the message receiving address of the recipient (specifically, by accessing a DID corresponding to the message receiving address using a resolver).

As another example, the message management unit 220 according to one embodiment of the invention may acquire the public key of the recipient on the basis of a transaction associated with the recipient in the first blockchain network (specifically, by accessing information recorded in the transaction). Here, according to one embodiment of the invention, the transaction associated with the recipient in the first blockchain network may be specified on the basis of the message receiving address of the recipient.

However, the method of acquiring the public key of the recipient in the first blockchain network according to one embodiment of the invention is not limited to those described above, but may be diversely changed as long as the objects of the invention may be achieved. For example, the public key of the recipient may be provided by the recipient.

Next, the communication unit 230 according to one embodiment of the invention may function to enable data transmission/reception from/to the message receiving address management unit 210 and the message management unit 220.

Lastly, the control unit 240 according to one embodiment of the invention may function to control data flow among the message receiving address management unit 210, the message management unit 220, and the communication unit 230. That is, the control unit 240 according to one embodiment of the invention may control data flow into/out of the messenger service provision system 200 or data flow among the respective components of the messenger service provision system 200, such that the message receiving address management unit 210, the message management unit 220, and the communication unit 230 may carry out their particular functions, respectively.

The embodiments according to the invention as described above may be implemented in the form of program instructions that can be executed by various computer components, and may be stored on a computer-readable recording medium. The computer-readable recording medium may include program instructions, data files, and data structures, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler, but also high-level language codes that can be executed by a computer using an interpreter. The above hardware devices may be changed to one or more software modules to perform the processes of the present invention, and vice versa.

Although the present invention has been described above in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

## Claims

1. A method for providing a messenger service, the method comprising the steps of:
specifying a message receiving address of a recipient on the basis of an identifier for a first blockchain network associated with the recipient; and
transmitting, to the message receiving address, a message that is encrypted on the basis of a public key of the recipient in the first blockchain network and decrypted on the basis of a private key of the recipient in the first blockchain network.

2. The method of Claim 1, wherein the identifier for the first blockchain network is a wallet address of the recipient used in the first blockchain network.

3. The method of Claim 1, wherein in the specifying step, the message receiving address is specified on the further basis of an identifier for the first blockchain network itself.

4. The method of Claim 3, wherein the specified message receiving address and the public key of the recipient in the first blockchain network are recorded on a second blockchain network, and the public key of the recipient is acquired on the basis of the recorded message receiving address.

5. The method of Claim 1, wherein the public key of the recipient is acquired on the basis of a transaction associated with the recipient in the first blockchain network.

6. A non-transitory computer-readable recording medium having stored thereon a computer program for executing the method of Claim 1.

7. A system for providing a messenger service, the system comprising:
a message receiving address management unit configured to specify a message receiving address of a recipient on the basis of an identifier for a first blockchain network associated with the recipient; and
a message management unit configured to transmit, to the message receiving address, a message that is encrypted on the basis of a public key of the recipient in the first blockchain network and decrypted on the basis of a private key of the recipient in the first blockchain network.

8. The system of Claim 7, wherein the identifier for the first blockchain network is a wallet address of the recipient used in the first blockchain network.

9. The system of Claim 7, wherein the message receiving address management unit is configured to specify the message receiving address on the further basis of an identifier for the first blockchain network itself.

10. The system of Claim 9, wherein the message receiving address management unit is configured to cause the specified message receiving address and the public key of the recipient in the first blockchain network to be recorded on a second blockchain network, and the message management unit is configured to acquire the public key of the recipient on the basis of the recorded message receiving address.

11. The system of Claim 7, wherein the message management unit is configured to acquire the public key of the recipient on the basis of a transaction associated with the recipient in the first blockchain network.
